(19) **Europäisches Patentamt**

**European Patent Office**

**Office européen des brevets**

(11) **EP 0 857 554 B1**

(12) **EUROPÄISCHE PATENTSCHRIFT**

(45) Veröffentlichungstag und Bekanntmachung des Hinweises auf die Patenterteilung:
**14.08.2002 Patentblatt 2002/33**

(51) Int Cl.⁷: **B29C 33/04**, B29C 45/73

(21) Anmeldenummer: **98102019.1**

(22) Anmeldetag: **05.02.1998**

(54) **Formen und Werkzeuge mit einem feingliedrig verzweigten Temperierkanalnetzwerk, ihre Verwendung und Verfahren zur Temperierung von Formen und Werkzeugen**

Moulds and tools with a finely branched network of channels for temperature control, their use and method of controlling temperature in moulds and tools

Moules et outils comportant un réseau finement ramifiée de canaux pour le contrôle de la température, leur utilisation et méthode de contrôle de la température de moules et d'outils

(84) Benannte Vertragsstaaten:
**AT BE CH DE DK ES FI FR GB GR IE IT LI LU MC NL PT SE**

(30) Priorität: **07.02.1997 DE 19704700**

(43) Veröffentlichungstag der Anmeldung:
**12.08.1998 Patentblatt 1998/33**

(73) Patentinhaber: **FRAUNHOFER-GESELLSCHAFT ZUR FÖRDERUNG DER ANGEWANDTEN FORSCHUNG E.V.
80636 München (DE)**

(72) Erfinder:
• **Baumann, Frithjof, Dipl.-Ing.
71272 Renningen (DE)**
• **Völkle, Dietmar, Dipl.-Ing.
8280 Kreuzlingen (CH)**

(56) Entgegenhaltungen:
**EP-A- 0 361 390        WO-A-97/15434
DE-C- 3 103 890        FR-A- 2 159 231
US-A- 5 562 846**

## Beschreibung

Die Erfindung betrifft definiert, feingliedrig und punktuell temperierbare Formen und Werkzeuge gemäß dem Oberbegriff des Patentanspruchs 1, ihre Verwendung und ein Verfahren zur Temperierung der Formen und Werkzeuge gemäß dem Oberbegriff des Patentanspruchs 15. Sie bezieht sich auf das Gebiet der Temperierung von Werkstoffen, Bauteilen oder dergleichen. Sie ist überall dort einsetzbar, wo eine Form, ein Bauteil, ein Werkstoff definiert und gleichmäßig temperiert, und insbesondere Wärme abgeführt werden muß. Besonders zweckmäßig ist die Anwendung der Erfindung in der Formgebung, insbesondere bei der Temperierung von Formen und Formgebungswerkzeugen, und bei der Temperierung stark hitzebeanspruchter Bauteile, wie z.B. bei der Kühlung von Verbrennungsmotoren. Demgemäß ist der Einsatz der Erfindung besonders in der Kunststoffverarbeitung, in der Metallurgie und im Motorenund Fahrzeugbau zweckmäßig.

Zur Temperierung von Formen und Werkzeugen, insbesondere für die Kunststoffverarbeitung, werden Rohre oder Bohrungen, die auch eingefräßt sein können, in das Formgebungs-Werkzeug eingebracht (beispielsweise Menges, Georg "Anleitung zum Bau von Spritzgießwerkzeugen" in Menges/Mohren - 3. völlig überarbeitete und erweiterte Auflage, Hanser-Verlag München/Wien, 1991 oder DE-A-44 08 707 oder "Kühlkanäle folgen der Formteilkontur" in Zeitschrift Kunststoffe 87 (1997) 1, Seiten 36 bis 37) und mit einem Temperiermedium durchspült. Über das Medium können die Werkzeuge gekühlt oder erwärmt werden. So werden zum Beispiel bei der Verarbeitung von duroplastischen Kunststoffen die Formen und Werkzeuge erwärmt, während bei der Verarbeitung von thermoplastischen Kunststoffen die Werkzeuge häufig gekühlt werden. Eine Kühlung der Werkzeuge kommt auch beim Aluminiumdruckguß zum Einsatz.

Die Temperierung der Formen und Werkzeuge bildet einen Regelkreis zur Regulierung der Temperatur auf eine gewünschte Temperatur. Als Störeinfluß auf die Werkzeugtemperatur wirkt die in die Form oder Werkzeug eingebrachte Materialmasse oder Schmelze.

Bisherige Temperiersysteme können aufgrund der eingeschränkten Fertigungsmöglichkeiten nur eine inhomogene Temperierung erzielen. Als Folge sind die entstehenden Produkte mit temperierungsbedingten Problemen behaftet. Die unvollständige Formfüllung von Kunststoffwerkzeugen ist ebenfalls eine direkte Folge einer unausgeglichenen Temperierung. Zugleich ist eine nicht weiter verkürzbare Zykluszeit für die Herstellung von Produkten von Nachteil.

Die DE-A-25 03 105 und die DE-A-29 19 683 zeigen eine Anordnung zum Temperieren von Flächenpreßwerkzeugen. Hierbei werden einzelne Kühlmittelkanäle über zusätzliche Verbindungskanäle in einer Ebene miteinander verbunden, um eine möglichst gleichmäßige Verteilung der Kühlkanäle und somit eine gleichmäßige Temperaturverteilung unter der ebenen Oberfläche des Flächenpreßwerkzeuges zu erreichen. Das Problem einer unausgeglichenen Temperaturverteilung, das insbesondere bei unebenen Oberflächen von Formen oder

Werkzeugen auftriff, kann mit dieser Anordnung jedoch nicht gelöst werden.

Eine Möglichkeit zur Verbesserung der Temperaturverteilung bei komplizierter gestalteten Formen ist aus der DE 31 03 890 bekannt. Dieses Dokument zeigt eine aus Kunststoff bestehende Folienziehform, in die Kühlschlangen zur Temperierung eingebracht sind. Zur Optimierung der Kühlung sind in der Form Wärmeleitbleche vorgesehen, die mit den Kühlkanälen in Verbindung stehen.

In der EP 0 361 390 wird ebenfalls eine Vorrichtung sowie ein Verfahren, mit dem Hohlkörper gegossen werden können, beschrieben. Die Seitenwände der Form können durch einen in die Wände integrierten Rohrbündelwärmetauscher erwärmt oder abgekühlt werden. Die Kanäle, über die das zu formende Bauteil temperiert wird, haben einen konstanten Durchmesser und Abstand und verfügen auf der Strecke zwischen den Zu- bzw. Abflüssen nicht über weitere Verzweigungen. Damit tritt auch bei dieser Form das Problem auf, dass einer unausgeglichenen Temperaturverteilung, insbesondere bei unebenen Formen oder Werkzeugen nicht entgegengewirkt werden kann.

Die WO 97/15434 erläutert eine Vorrichtung sowie ein Verfahren, bei dem ein erwärmter Rohling, der aus einem thermoplastischen Material besteht, zwischen zwei Preßstempel geführt wird, auf deren Oberfläche unterschiedliche Formgebungswerkzeuge befestigt werden können und durch Pressen die gewünschte Form erzeugt wird. Anschließend wird das Bauteil direkt durch Einblasen von Luft gekühlt und aus der Form gelöst. Die in der WO 97/15434 beschriebene Vorrichtung verfügt über zwei Kühlkreise. Ein geschlossener Kühlkreislauf, der aus in regelmäßigen Abständen ausgebildeten Rohren besteht, kühlt mittels Konvektion die Form sowie die befestigten Formgebungselemente. Andererseits wird über ein offenes Kühlluftsystem Luft direkt auf das gerade geformte Bauteil geleitet bzw. vor dem Preßvorgang aus dem Zwischenraum zwischen Form und Rohling evakuiert wird.

Bei dieser Form sowie dem beschriebenen Verfahren stellt sich das Problem, dass die Kühlung des Bauteils größtenteils durch direkte Kühlung mit Luft erfolgt. Besonders bei komplizierten Geometrien der warmumgeformten Bauteile, läßt sich allerdings nicht sicherstellen, dass die Luft an alle Stellen des Bauteils gleichmäßig gelangt und somit ist keine gleichmäßige Abkühlung des Bauteils möglich.

Die US 5,562,846 beschreibt ein Kunststoffgußteil sowie das Verfahren zu seiner Herstellung. Die in dieser Druckschrift erläuterte Gußform verfügt über einen Kühlkanal mit konstantem Durchmesser, der einen Zu- und einen Ablauf hat. Dieser Kühlkanal läuft ringförmig in der Form um. Bei der Herstellung eines Bauteils kommt es zu sehr großen Temperaturgradienten und eine gleichmäßige Temperaturverteilung ist so nicht möglich.

In der FR-A-2 159 231 wird eine Vorrichtung sowie ein Verfahren zur Herstellung eines vorzugsweise aus Kunststoff bestehenden Hohlkörpers beschrieben. Es wird eine Herstellungsform erläutert, die über Kühlkanäle verfügt, in die ein Temperiermedium aus einem oder mehreren Zuläufen hineinströmt, bzw. diese Kühlkanäle wieder durch einen Ablauf verläßt. Es wird beschrieben, dass bei dem Einsatz dieses Verfahrens Strömungsformen auftreten, wie sie auch bei konventionellen Wärmeübertragern vorkommen.

Die Kühlkanäle verlaufen geradlinig zwischen den jeweiligen Zu- bzw. Abläufen und verfügen über einen konstanten Durchmesser.

Auch in diesem Fall bilden sich aufgrund der geometrischen Anordnung der Kühlkanäle starke Temperaturgradienten heraus, da die Kühlleistung der unterschiedlichen Kühlrohre gleich ist und somit nicht der Form des Bauteils angepasst ist. Durch die Ausbildung dieser Temperaturgradienten bilden sich gerade bei Bauteilen mit komplizierten geometrischen Formen oder unterschiedlicher Wandstärke Spannungen heraus, die zu einer Schädigung des Bauteils führen können.

Der Erfindung liegt demnach die Aufgabe zugrunde, Formen und Werkzeuge bzw. Bauteile gemäß dem Anwendungsgebiet vorzuschlagen, die Temperiersysteme enthalten, mit denen eine homogene Temperierung erzielt wird, mit denen somit auch Produkte mit stark verringerten bzw. ohne temperierungsbedingte Probleme herstellbar sind und mit denen die Zykluszeiten für die Produktherstellung weiter verkürzbar sind.

Erfindungsgemäß wird diese Aufgabe, die Formen und Werkzeuge betreffend gemäß dem Patentanspruch 1, die Verwendung der Formen und Werkzeuge betreffend gemäß dem Patentanspruch 7 und das Verfahren zur Temperierung betreffend gemäß dem Patentanspruch 15 gelöst.

Zweckmäßige Weiterbildungen der Erfindung sind Gegenstand der betreffenden abhängigen Ansprüche.

Demgemäß enthalten die erfindungsgemäßen Formen und Werkzeuge in ihrem Inneren eine arterielle Temperierstruktur in Gestalt eines arteriellen Gefäßsystems mit mehreren in Reihe angeordneten Verzweigungen, das mit einem oder mehreren Zu- und Abläufen gekoppelt ist, durch welche dann das jeweilige Temperiermedium zu- bzw. abgeführt wird. Vorteilhafterweise ist dieses arterielle Gefäßsystem so gestaltet, daß es in der Temperierzone ausgehend von Arterien mit großem Durchmesser bis zu Feinstgefäßen verzweigt ist und außerhalb der Temperierzone zu Gefäßen ähnlich Venen kanalisiert ist.

Wichtig für die Formen und Werkzeuge, die ein erfindungsgemäßes arterielles Gefäßsystem zur Temperierung der genannten Art enthalten sollen, ist, daß diese Formen und Werkzeuge aus einem Material bzw. Werkstoff bestehen, der mittels mindestens einem der Rapid-Prototyping-Verfahren verarbeitbar ist (z.B. Materialien, wie Kunststoff, Metall, Papier, Keramik und deren Mischungen).

Desweiteren ist es vorteilhaft, wenn das arterielle Gefäßsystem so in den Formen und Werkzeugen installiert ist, daß sich in ihrem Inneren unmittelbar unter der definiert zu temperierenden Oberfläche der Formen und Werkzeuge sehr fein verzweigte und vielgliedrig verästelte Kapillaren mit geringem Durchmesser bis ca. 20 µm (beispielsweise 10 µm) befinden und der Verlauf der Kapillaren der Oberfläche angepaßt ist. Im weiteren Verlauf zum Inneren der Formen und Werkzeuge bis hin zum Zu- bzw. Ablauf sollte dann die Verästelung abnehmen und der Durchmesser der Gefäße größer werden (in Abhängigkeit von der Werkzeuggröße bis zu 100 mm), so daß die Kapillaren allmählich in arterienartige Gefäße übergehen. Selbstverständlich können auch mehrere Zu- bzw. Abläufe pro arteriellem Gefäßsystem vorgesehen sein. Dies gilt auch für die folgenden besonderen Ausführungsformen. Für bestimmte Anwendungsfälle ist es sehr vorteilhaft, wenn die arteriellen Gefäßsysteme so in den Formen und Werkzeugen installiert sind, daß eine partielle bzw. abschnittweise Temperierung der Oberfläche möglich wird.

Das kann erreicht werden, wenn beispielsweise diese arteriellen Gefäßsysteme so installiert sind, daß sich in einem Werkzeug / einer Form mehrere dieser Gefäßsysteme befinden, die sich dann mit ihrem verästelten Teil, also dem Teil, in dem sie aus Kapillaren, die sehr feingliedrig verteilt sind, bestehen und der sich unmittelbar unter der zu temperierenden Oberfläche befindet, derart überlappen, daß an der zu temperierenden Oberfläche im Falle einer gewünschten gleichen Temperatur dieser unterschiedlichen Abschnitte auch die Grenzen zwischen den Abschnitten diese gleiche Temperatur aufweisen. Eine derartige Ausgestaltung der Formen und Werkzeuge bietet den Vorteil, daß die zu temperierende Oberfläche der Formen und Werkzeuge entweder auf gleiche Temperatur oder aber auch auf abschnittsweise unterschiedliche Temperatur gebracht werden kann. In Einzelfällen, in denen überhaupt nur ein Abschnitt der Oberfläche der Formen und Werkzeuge temperiert werden soll, kann es ausreichend sein, wenn nur unter diesem Oberflächenabschnitt im Inneren des Werkzeuges / der Form ein derartiges arterielles Gefäßsystem zur Temperierung installiert ist.

Für alle Varianten der erfindungsgemäßen Formen und Werkzeuge ist es jedoch von Vorteil, wenn das arterielle Gefäßsystem mit dem jeweiligen Zu- und Ablauf (oder den mehreren Zu- und Abläufen) einen Kreislauf darstellt, wobei außerhalb des Werkzeuges / der Form die Führung des Temperiermediums von Ab- zum Zulauf zur erneuten Verwendung des Temperiermediums über eine Einrichtung erfolgen sollte, mit der die gewünschte Temperatur des Temperiermediums wieder eingestellt werden kann.

Die Herstellung dieser Formen und Werkzeuge, in denen erfindungsgemäß das oder die arteriellen Gefäßsysteme installiert sind, erfolgt mittels Rapid-Prototyping-Verfahren, z.B. Stereolithographie (SLA), Lasersintern (SLS), LOM (Laminated Object Manufacturing), FDM (Fused Deposition Modeling) und MJM (Multi Jet Modeling).

Es erfolgt hierbei ein generativer, d.h. schichtweiser Aufbau. Hierbei werden die Formen, Werkzeuge und Bauteile durch Schichtverbund der Querschnitte hergestellt. Generative Verfahren, bei denen dreidimensionale Modelle direkt aus CAD-Daten ohne Zerspanungsvorgänge aufgebaut werden, faßt man unter dem Begriff Rapid Prototyping zusammen.

Dabei werden Methoden entwickelt, um aus digitalen Daten von Konstruktionsprogrammen direkt Modelle aus Kunststoff oder Wachs herzustellen. Diese sind hauptsächlich geeignet, um die optische oder haptische Qualität zu überprüfen. Es gibt mittlerweile erste Verfahren, auch Metalle zu verarbeiten. Damit lassen sich funktionsfertige Prototypen, Werkzeuge für die spätere Serienfertigung oder sogar in geringen Stückzahlen die Produkte selbst, erstellen.

Man unterscheidet zunächst zwischen Designprototypen, die vor allem der optischen und haptischen Bewertung von Entwürfen dienen, sowie den geometrischen Prototypen, bei denen die Maß- und Formgenauigkeit im Vordergrund steht. Funktionelle Prototypen zur Überprüfung einzelner Funktionen und technische Prototypen sind solche, die alle Funktionsanforderungen des Serienproduktes erfüllen, wobei auch zunehmend Vorserien-Produkte für intensive Produkt und Markttests eingesetzt werden.

Für den Bauteilaufbau wird der Geometriedatensatz des dreidimensionalen Modells in einzelne Querschnitte definierter Höhe zerlegt. Deren Abstände korrelieren mit den Schichtdicken beim späteren Bauprozeß.

Mit dieser Methode lassen sich Orte einer bestimmten Schnittebene eines Bauteils definieren, an denen weiteres Material angelagert wird. Die einzelnen, wie auch die oben aufgeführten Verfahren des Rapid Prototyping, unterscheiden sich in der Art und Weise dieser Materialhinzufügung.

Bei der vorliegenden Erfindung wurde vorteilhaft ausgenutzt, daß in der Natur (lebende und nichtlebende Natur) im Prinzip bei allen höheren Lebewesen über feinverästelte, bis unmittelbar unter die Oberfläche reichende, Gefäßsysteme (z.B. beim Mensch das System der Blutgefäße oder bei Pflanzen, Baumstrukturen) neben dem Transport wichtiger Stoffe, Mineralien usw. auch eine Temperierung erfolgt. Diese sehr kompliziert verlaufenden Gefäßsysteme, die im Prinzip in jedem höheren Lebewesen vorkommen (Menschen, Tiere, Pflanzen), waren bisher technisch nicht in dieser Kompliziertheit nachgestaltbar. Durch die Möglichkeiten, die die Rapid-Prototyping-Verfahren bieten, ist dies jedoch erreicht worden.

Die so erhaltenen Formen und Werkzeuge, die aus unterschiedlichen Materialien (z.B. Kunststoff, Metall, Papier, Keramik und deren Mischungen) bestehen können, die aber mittels Rapid-Prototyping-Verfahren oder nachfolgenden Verfahren verarbeitbar sein müssen, können beispielsweise als temperierbare Formgebungswerkzeuge (z.B. als Gießformen oder als Formgebungswerkzeuge für Heiß- und Kaltverformung wie etwa Walzen) oder als definiert temperierbare Maschinenelemente, vorzugsweise in thermodynamischen Anlagen bzw. Kraftmaschinen (z.B. in Verbrennungskraftmaschinen) verwendet werden.

Die Temperierung der Formen und Werkzeuge selbst erfolgt in an sich bekannter Weise derart, daß das arterielle Gefäßsystem mit dem auf der gewünschten Temperiertemperatur temperierten Temperiermedium, das flüssig (z.B. Wasser) oder gasförmig sein kann, durchströmt wird. Das Temperiermedium kann aber auch derart beschaffen sein; daß in der arteriellen Temperierstruktur eine Phasenumwandlung von flüssig zu gasförmig erfolgt. Beispielsweise ist das der Fall, wenn das Temperiermedium $N_2$ oder $CO_2$ ist.

Dabei ist es von Vorteil, wenn dieses Temperiermedium in einem Kreislauf geführt wird und nach Verlassen der Form / des Werkzeuges am Ablauf zu einer Einrichtung (beispielsweise Thermostat) geführt wird, bei dem das Temperiermedium wieder auf die Temperatur gebracht wird, die es am Zulauf aufweisen soll.

Generative Herstellungsverfahren, z.B. Rapid Prototyping und insbesondere Stereolithographie, erlauben den Aufbau von Formen und Werkzeugen mit einer integrierten arteriellen Temperierstruktur. Dabei ist es möglich, Zonen, in denen ein großer Wärmeübergang erforderlich ist, mit einer feinadrigen Temperierstruktur auszubilden. Damit wird im Werkzeug ein Gefäßsystem aufgebaut, das ausgehend von Arterien mit großen Durchmessern bis zu Feinstgefäßen verzweigt ist und außerhalb der Temperierzone zu Gefäßen, ähnlich der Venen, kanalisiert ist. Durch Simulation der Wärmequellen oder Senken kann mit numerischen Methoden das Gefäßsystem vorherberechnet und direkt in die Konstruktion der Formen und Werkzeuge integriert werden. Dabei kann der Gefäßabstand von der Formteiloberfläche mit berücksichtigt werden. Das durch das Gefäßsystem geführte Medium wird nach Verlassen des Werkzeuges mit Hilfe von Temperiergeräten auf eine genau definierte Temperatur gebracht bevor es wieder im Kreislauf durch das Werkzeug gepumpt wird.

Folgeschritt-Technologien des Rapid Prototyping erlauben auch die Herstellung von Gefäßstrukturen in anderen Maschinenelementen. Als Beispiel soll die Kühlung eines Verbennungsmotors angeführt werden. Geeignete Abgußmöglichkeiten in Metall, Keramik, Verbundwerkstoffe oder Kunststoffe erlauben die Herstellung solcher Strukturen zur gezielten Kühlung des Verbrennungsraumes.

Bei der erfindungsgemäßen Lösung ist von Vorteil, daß die Temperatur der Werkzeuge über die Oberfläche der Form homogen einstellbar ist. Durch die absolute Gestaltungsfreiheit der Rapid-Prototyping-Systeme, kann eine optimale Anpassung an die Werkzeugkontur erfolgen, wie sie mit konventionellen Herstellungsmethoden von Werkzeugen nicht erzielt werden kann. Damit kann die Entstehung von temperaturbedingten Produktfehlern verringert werden. Auch ist die Grundlage geschaffen, für die Verwendung von besonders temperaturempfindlichen Werkzeugmaterialien. Insbesondere die Empfindlichkeit gegenüber Temperaturschock kann verbessert werden. Der Einsatz von derartigen Werkzeugen und Formen, insbesondere Stereolithographiewerkzeugen für die Serienproduktion hätte eine deutliche Verkürzung der Produktentwicklungszeiten und eine wesentliche Zeitersparnis im Werkzeugbau zur Folge.

An nachfolgenden Ausführungsbeispielen soll die Erfindung näher erläutert werden.

**Ausführungsbeispiel**

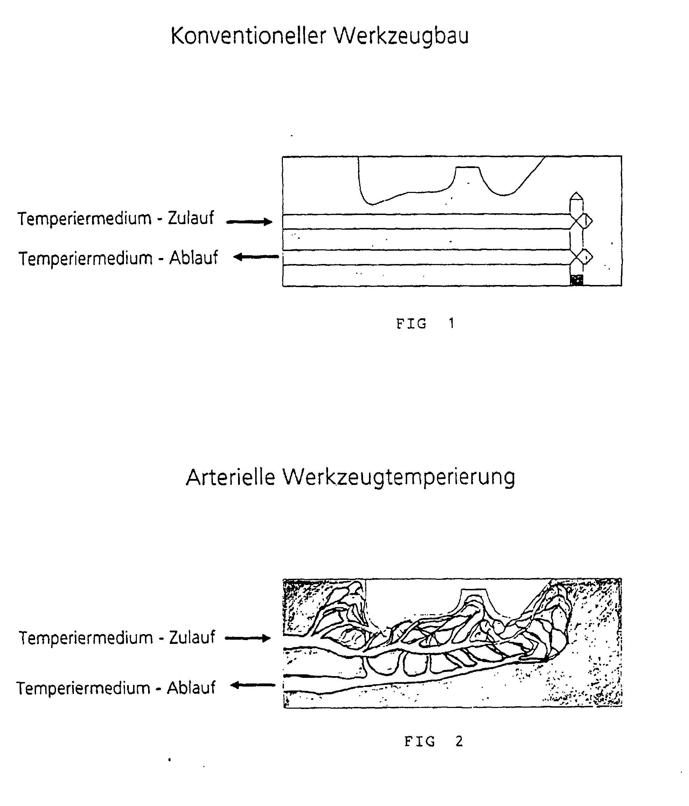

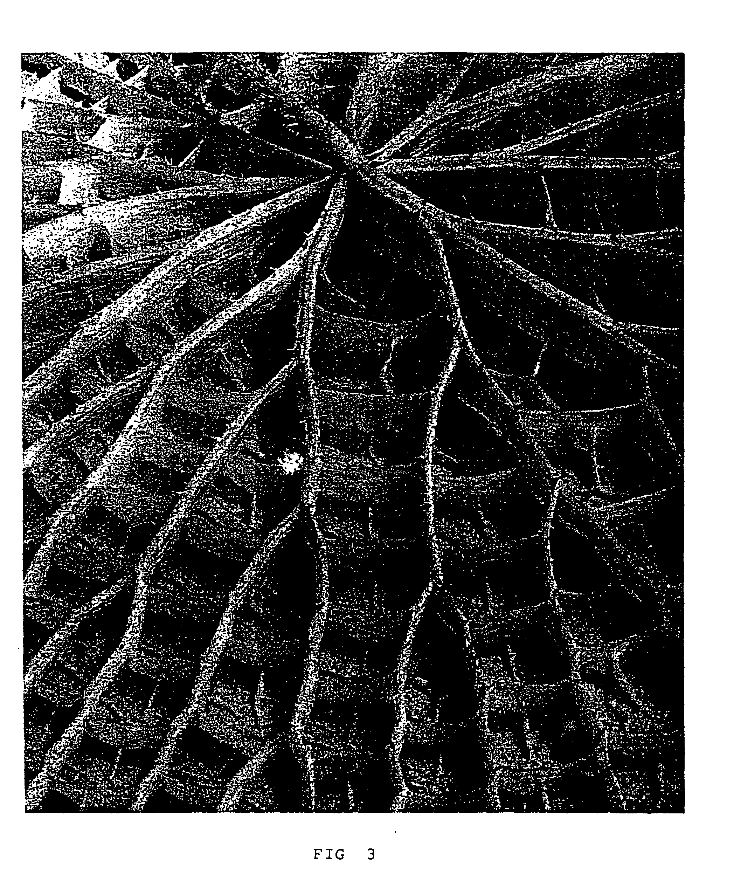

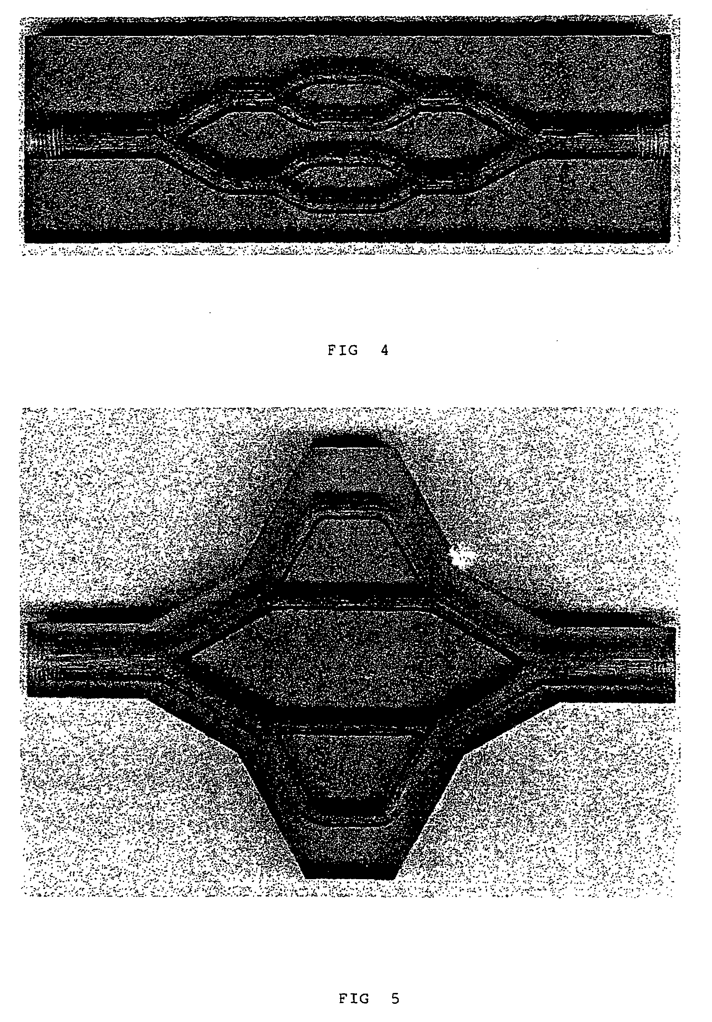

In Figur 1 ist dabei ein konventioneller (nach dem Stand der Technik) und in Figur 2 ein arterieller (gemäß der Erfindung) Werkzeugaufbau schematisch dargestellt, während die Figuren 3, 4 und 5 Varianten der erfindungsgemäßen arteriellen Temperierstruktur darstellen.

Um eine arterielle Kühlstruktur aufbauen zu können, muß man zuerst nach vorhandenen Verzweigungsarten in der Natur suchen und deren Gesetzmäßigkeiten von Winkel und Stablänge erkennen.

Grundsätzlich kann man Verzweigungen in 3 verschiedenen Bereichen finden.

    1) Verzweigungen in der lebenden Natur

- Menschen (z.B. das Adernsystem)
- Pflanzen (Blätter, Zweige, Wurzeln)
- Tiere (Adern, Gliedmaßen, Federn)
- Kolonien (z.B. Korallen, tierische Wegesysteme, tierische Gespinste).

    2) Verzweigungen in der nicht lebenden Natur

- Kristallaufbau
- Bruchmuster
- Verzweigungsysteme bei Wasserläufen
- elektrischen Entladungen.

    3) Verzweigungen in der Technik

- Transportsystemen
- Wegesystemen (generatives und komplexes Wegesystem)
- Leitungssysteme mit Rohren für Flüssigkeiten und Gasen
- Elektrische Leitungssysteme

- optimierte Krafttransportsysteme.

So sind beispielsweise Verzweigungen bei Bäumen in der Natur sehr vielfältig und manchmal auch nicht mathematisch zu erfassen. Sie sind gewissermaßen "Fingerabdrücke" jeder einzelnen Baumart. In Anbetracht dieser Vielfalt wird sich an dieser Stelle auf Gesetzmäßigkeiten des geringsten Strömungsenergieaufwandes in Hinsicht des Verzweigungswinkels und davon abhängig das Verhältnis der Durchmesser der beiden abzweigenden Äste beschränkt. Als allgemeine Regel kann man sagen, daß je kleiner der Zweig, der vom Hauptstamm abzweigt, desto näher an 90° wird der Winkel der Abzweigung vom Stamm sein.

Gabelt sich ein Stamm in zwei gleichgroße Zweige, wobei das Verhältnis ihrer Durchmesser gleich 1 ist, weichen sie um ungefähr 60° voneinander ab. Entstehen bei der Gabelung kleine Zweige mit einem Verhältnis der Zweigdurchmesser zum Durchmesser der Verlängerung des Stammes nahe Null, dann ist die Abweichung nahe 90°. Die Verzweigungswinkel variieren also zwischen 60° und 90°.

Jedoch stellt sich nun noch die Frage über das Verhältnis der Durchmesser zwischen der des Stammes und der Zweige. Murray (siehe z.B. Stevens, Peter S., "Formen in der Natur", R. Oldenbourg Verlag, 2. Aufl. 1988) nahm an, daß die Volumina aller Zweige und die des Stammes gleich sind, also:

$$d_{03} = d_{13} + d_{23}$$

Durch spätere Versuche, bei denen Zweige gewogen und ihre Verzweigungswinkel nachgemessen wurden, stellte sich heraus, daß der Exponent nicht 3 ist sondern 2,5 ist. Dies stimmt mit anderen Forschungsergebnissen überein, bei denen der Winkel eher gegen 60° tendiert. Dies festigt die Annahme, daß es den Zweigen durch die engere Gabelung des Baumes erleichtert wird, sich gegen die Schwerkraft zu halten.

Wenn man jedoch nur den gleichmäßigen Transport von Wasser betrachtet, beträgt der Exponent 3. Die Erklärung hierfür ist, daß die Zweige für den Flüssigkeitstransport mehr Raum bieten müssen, als der Stamm, der sie ernährt. Dies folgt aus der Tatsache, daß die Zweige mehr Widerstand beim Fließen verursachen, als der Stamm bietet. Somit muß die Querschnittsfläche der Zweige vergrößert werden für den Transport derselben Menge Flüssigkeit.

Im Falle der Blutgefäße fand man heraus, daß sich die Blutgefäße an einer Abzweigung nicht "nur so" verengen, sondern dabei recht genau eine mathematische Konstante einhalten: das jeweilige dünnere Röhrchen steht zum dickeren in einem Verhältnis von **0,8 zu 1**. Dieses Verhältnis scheint die optimale Anwort darauf zu sein, daß Druck und Strömungsgeschwindigkeit absinken, je enger die Kanäle werden.

Feinbau und Strömungsverhältnisse im Blutkreislauf stellen sich wie folgt dar:

Vom Herzen geht die Aorta ab. Sie muß den vollen Druck auffangen, der vom pumpenden Herzen erzeugt wird, und das heißt auch: auf jähe Druckschwankungen reagieren können. Dafür ist sie mit ihren muskulösen, mit Bindegewebe durchsetzten Wandungen gut gerüstet, zumal sie sich bei Bedarf auch ausbeulen kann. Der Druck erreicht normalerweise 100 mm Quecksilbersäule - das entspricht einem Achtel des Luftdruckes in Meereshöhe. Die Anfangsgeschwindigkeit des Blutes an dieser Stelle liegt bei 70 cm pro Sekunde. Es zweigen Arterien ab, die immer dünner werden. Die Muskelzellen und Fasernetze in den Aderwandungen nehmen ab, der Druck sinkt auf 80 mm Quecksilbersäule, die Strömungsgeschwindigkeit auf weniger als 10 cm pro Sekunde. Mit Durchmessern von nur 20 bis 40 Tausendstel Millimetern folgen im Kreislauf die Endgefäße des Arteriensystems, die Arteriolen. Sie sind von glatten Muskelzellen umgeben, die den Durchfluß verengen und unter Umständen ganz schließen können. Der Druck sinkt auf weniger als 30 mm Quecksilbersäule, die Strömungsgeschwindigkeit beträgt nur noch 2 mm pro Sekunde. Die feinsten Endverzweigungen sind Kapillaren. Ihr Durchmesser kann weniger als 5 Tausendstel Millimeter betragen: rote Blutkörperchen müssen sich bei der Passage schon verwinden und durchdrängen. Der Druck fällt hier auf weniger als 12 mm Quecksilbersäule ab, die Strömungsgeschwindigkeit auf oft weniger als einen halben Millimeter pro Sekunde: Sickertempo. Der Rückweg des Blutes geschieht nun in umgekehrter Reihenfolge: von der Miniröhre zur Pipeline.

Bei der Erstellung von Formen oder Werkzeugen mit integrierter arterieller Kühl- und Temperierstruktur sind die oben aufgezeigten, in der Natur vorkommenden Verzweigungsarten Vorbild. Grundvoraussetzung für die Erstellung von Formen und Werkzeugen mit den Verfahren des Rapid Prototyping ist die konstruktive Beschreibung als dreidimensionales Volumenmodell. Ein solches Volumenmodell enthält sämtliche Angaben zu der räumlichen Lage von einzelnen zu einem Ganzen zusammengefaßten Elementarkörpern (Quader, Kugel, Kegel o.ä.). Eine weitere Möglichkeit besteht darin, einen Volumenkörper durch die räumliche Anordnung der den Körper umfassenden Flächen zu beschreiben. Auch hierbei ist die räumliche Information (xyz-Koordinaten) aller Flächen festgelegt.

Die Konstruktion von Formen und Werkzeugen erfolgt anhand der oben beschriebenen Möglichkeiten, d.h. mit einer Anordnung von Elementarkörpern oder der Beschreibung durch aneinandergeordnete und miteinander verbundene Flächen. Erst in einem folgenden Schritt wird die arterielle Kühlstruktur in das Volumenmodell hineinkonstruiert. Hierbei werden die ebenfalls als Volumenmodell erstellten Kühlstrukturen nicht zu dem bestehenden Volumenmodell der Form oder Werkzeug hinzugefügt, sondern von diesem substrahiert. Als Resultat entsteht die Form oder das Werkzeug mit einem integrierten Röhrensystem, bzw. hier die gewünschte Kühlstruktur.

Für einfache Regelgeometrien kann diese Vorgehensweise (Konstruktion der Form als geschlossenes Volumenmodell, anschließend Konstruktion der Kühlstruktur als geschlossenes Volumenmodell und endgültige Beschreibung durch Ausschneiden der Kühlstruktur aus der Form) befolgt werden. Die Naturgesetze für die separate Konstruktion der Kühlstruktur sind oben beschrieben. Eine allgemein gültige Gesetzmäßigkeit ist nach dem Stand der Technik noch nicht beschrieben. Bisherige Verzweigungsalgorithmen sind nur für Baumstrukturen eingehend untersucht worden.

Für die Konstruktion komplexer und filigraner Geometrien ist dieser Konstruktionsaufwand nicht erfaßbar. Hier ist die Simulation der zu erwartenden Vorgänge ohne jegliche Kühlstruktur erforderlich. Diese Simulation erfolgt mittels der numerischen Finite Element Methode und ist heute für den Formen- und Werkzeugbau bereits Stand der Technik. Die Ergebnisse solcher Analysen bilden dann die Grundlage für eine gezielte Auslegung und Konstruktion der arteriellen Kühlstruktur. Vorgegeben werden dann für diese automatische Anpassung nur noch die gewünschten Randbedingungen, wie z.B. die Lage der Einlaß- oder Auslaßöffnung für die Kühlstruktur, Abstand der Gefäße von der Formenoberfläche oder die gewünschte homogene Temperatur innerhalb der Form. Diese Kombination von Simulation und Konstruktion ist bisher nur für die Belastungsoptimierung von Bauteilen bekannt. Eine bisher fehlende mathematische Beschreibung der Naturgesetze für arterielle Systeme bedingt die noch ausstehenden selbstoptimierenden Konstruktionsalgorithmen.

**Patentansprüche**

1. Definiert, feingliedrig und punktuell temperierbare Formen und Werkzeuge, insbesondere für die Kunststoffbearbeitung, bei denen die Temperierung mittels eines Temperiermediums, das sich im Werkzeug bzw. in der Form befindet, erfolgt, **dadurch gekennzeichnet, daß** diese Formen und Werkzeuge in ihrem Inneren eine arterielle Temperierstruktur in Gestalt eines arteriellen Gefäßsystems mit mehreren in Reihe angeordneten Verzweigungen aufweisen, bei dem auf eine Verzweigung zumindest zwei parallele Verzweigungen folgen und das mit einem oder mehreren Zu- und Abläufen gekoppelt ist, durch welche dann das jeweilige Temperiermedium zu- bzw. abgeführt wird.

2. Formen und Werkzeuge nach Anspruch 1, **dadurch gekennzeichnet, daß** das arterielle Gefäßsystem in der Temperierzone ausgehend von Arterien mit großen Durchmessern bis zu Feinstgefäßen verzweigt ist und außerhalb der Temperierzone zu Gefäßen ähnlich Venen kanalisiert ist.

**3.** Formen und Werkzeuge nach Anspruch 2, **dadurch gekennzeichnet, daß** das arterielle Gefäßsystem so in den Formen und Werkzeugen installiert ist, daß sich in ihrem Inneren unmittelbar unter der definiert zu temperierenden Oberfläche der Formen und Werkzeuge sehr fein verzweigte und vielgliedrig verästelte Kapillaren mit geringem Durchmesser bis etwa 20 μm befinden, die dann zum Form- bzw. Werkzeuginneren hin mit zunehmendem Durchmesser, der in Abhängigkeit von der Werkzeuggröße auch 100 mm betragen kann, und abnehmender Verästelung in Arterien übergehen, die dann in den/die Zulauf/Zuläufe bzw. Ablauf/Abläufe münden.

**4.** Formen und Werkzeuge nach Anspruch 3, **dadurch gekennzeichnet, daß** bei Formen und Werkzeugen, bei denen nur ein Abschnitt ihrer Oberfläche temperiert werden soll, nur unter der Oberfläche dieses Abschnitts ein arterielles Gefäßsystem zur Temperierung oder gezielte partielle Verästelungen installiert sind.

**5.** Formen und Werkzeuge nach Anspruch 3 oder 4, **dadurch gekennzeichnet, daß** bei Formen und Werkzeugen, bei denen zwar die gesamte Oberfläche oder größere Teile der Oberfläche temperiert werden sollen, diese Oberfläche der Formen und Werkzeuge in bestimmten Abschnitten aber unterschiedlich temperiert werden soll, zumindest unter jedem unterschiedlich zu temperierenden Oberflächenabschnitt ein separates arterielles Gefäßsystem mit jeweiligem separatem Zu- und Ablauf bzw. separaten Zu- und Abläufen installiert ist.

**6.** Formen und Werkzeuge nach einem oder mehreren der Ansprüche 1 bis 5, **dadurch gekennzeichnet, daß** das arterielle Gefäßsystem mit den ein oder mehreren Zu- und Abläufen einen Kreislauf darstellt, bei dem zwischen dem Ablauf, an dem das Temperiermedium die Form oder das Werkzeug verläßt, und dem Zulauf eine Einrichtung zur Einstellung des Temperiermediums auf die gewünschte Temperatur installiert ist.

**7.** Verwendung der Formen und Werkzeuge gemäß einem oder mehreren der Ansprüche 1 bis 6 als temperierbare Formgebungswerkzeuge.

**8.** Verwendung nach Anspruch 7, als Gießformen zur Bauteilherstellung aus der Schmelze.

**9.** Verwendung nach Anspruch 7, als Formgebungswerkzeug bei Heiß- und Kaltverformung von Metallteilen.

**10.** Verwendung nach Anspruch 7, als temperierbare Walze.

**11.** Verwendung der Formen und Werkzeuge gemäß einem oder mehreren der Ansprüche 1 bis 6, als definiert temperierbare Maschinenelemente.

**12.** Verwendung nach Anspruch 11, als definiert temperierbare Maschinenelemente in thermodynamischen Anlagen bzw. Kraftmaschinen.

**13.** Verwendung nach Anspruch 12, als definiert temperierbare Elemente in Verbrennungskraftmaschinen.

**14.** Verwendung nach Anspruch 13, zur Kühlung eines Verbrennungsmotors.

**15.** Verfahren zur Temperierung der Formen und Werkzeuge gemäß einem oder mehreren der Ansprüche 1 bis 6, die gemäß einem oder mehreren der Ansprüche 7 bis 14 verwendet werden können, **dadurch gekennzeichnet, daß** das arterielle Gefäßsystem über den/die Zulauf/Zuläufe bis zu dem/den Ablauf/Abläufen mit dem Temperiermedium durchströmt wird.

**16.** Verfahren nach Anspruch 15, **dadurch gekennzeichnet, daß** das Temperiermedium im Kreislauf geführt wird und nach Verlassen des Ablaufes in einer Temperiereinheit wieder auf die Temperatur für den Zulauf gebracht wird und anschließend wieder dem Zulauf zugeführt wird.

**17.** Verfahren nach Anspruch 15 oder 16, **dadurch gekennzeichnet, daß** das Temperiermedium gasförmig oder flüssig ist bzw. eine Phasenumwandlung von flüssig zu Dampf in der arteriellen Temperierstruktur erfolgt.

**18.** Verfahren nach Anspruch 17, **dadurch gekennzeichnet, daß** das Temperiermedium Wasser ist.

**19.** Verfahren nach Anspruch 17, **dadurch gekennzeichnet, daß** das Temperiermedium Öl ist.

**20.** Verfahren nach Anspruch 17, **dadurch gekennzeichnet, daß** das Temperiermedium $N_2$ oder $CO_2$ ist, welche in flüssiger oder gasförmiger Form der arteriellen Temperierstruktur zugeführt werden.

## Claims

**1.** Moulds and tools which can be temperature controlled in a defined, finely structured and localised manner, especially for machining plastics, in which the temperature control is effected by means of a temperature control medium which is present in the tool or mould, **characterized in that** these moulds and tools have an arterial temperature control structure in their interior in the form of a arterial system of vessels with a plurality of branchings arranged in series, in which at least two parallel branchings follow at a branching, which structure is coupled to one or more feed and drain lines, through which the temperature control medium in question is supplied and drained respectively.

2. Moulds and tools according to claim 1, **characterized in that** the arterial system of vessels is branched in the temperature control zone starting from arteries with large diameters down to finest vessels and is channelled outside the temperature control zone to vessels like veins.

3. Moulds and tools according to claim 2, **characterized in that** the arterial system of vessels is so installed in the moulds and tools that very finely branched and many-membered ramified capillaries with small diameter to approximately 20 μm are present in the interior directly below the defined surfaces of the moulds and tools to be temperature controlled, which capillaries then pass towards the interior of the mould or tool into arteries with increasing diameter, which can amount to 100 mm, depending on the tool size, and decreasing ramification, which arteries then open into the feed line(s) or drain line(s).

4. Moulds and tools according to claim 3, **characterized in that** in the case of moulds and tools in which only a section of their surface is to be temperature controlled, a arterial system of vessels for the temperature control or specific partial ramifications are installed only under the surface of this section.

5. Moulds and tools according to claim 3 or 4, **characterized in that** in the case of moulds and tools in which in fact the whole surface or major parts of the surface are to be temperature controlled, this surface of the moulds and tools is to be temperature controlled in specific sections but to different extents, at least below each surface region to be temperature controlled differently a separate arterial vessel system with respective separate feed line and drain lines or separate feed lines and drain lines is installed.

6. Moulds and tools according to one or more of claims 1 to 5, **characterized in that** the arterial system of vessels forms a circuit with the one or more feed and drain lines, in which a device for setting the temperature control medium to the desired temperature is installed between the drain line at which the temperature control medium leaves the mould or tool and the feed line.

7. Use of the moulds and tools according to one or more of claims 1 to 6 as a shaping tool with controllable temperature.

8. Use according to claim 7 as casting moulds for producing components from the melt.

9. Use according to claim 7 as a shaping tool in hot and cold forming of metal parts.

10. Use according to claim 7 as a roller with controllable temperature.

11. Use of the moulds and tools according to one or more of claims 1 to 6 as a machine element with defined temperature control.

12. Use according to claim 11 as a machine element with defined temperature control in thermodynamic installations or power engines.

13. Use according to claim 12 as an element with defined temperature control in internal combustion engines.

14. Use according to claim 13 for cooling an internal combustion engine.

15. A method of controlling the temperature of moulds and tools according to one or more of claims 1 to 6 which can be used according to one or more of claims 7 to 14, **characterized in that** the temperature control medium is passed through the arterial system of vessels via the feed line(s) to the drain line(s).

16. A method according to claim 15, **characterized in that** the temperature control medium is circulated and after leaving the drain line is brought to the temperature for the feed line in a temperature control unit and is then fed to the feed line again.

17. A method according to claim 15 or 16, **characterized in that** the temperature control medium is gaseous or liquid or undergoes a phase change from liquid to vapour in the arterial temperature control structure.

18. A method according to claim 17, **characterized in that** the temperature control medium is water.

19. A method according to claim 17, **characterized in that** the temperature control medium is oil.

20. A method according to claim 17, **characterized in that** the temperature control medium is $N_2$ or $CO_2$, which is fed to the arterial temperature control structure in liquid or gaseous form.

**Revendications**

1. Moules et outillage susceptibles d'être mis à une température définie de manière ponctuelle et avec une répartition fine, notamment pour travailler des matières plastiques, la mise en température étant assurée par un fluide caloporteur qui se trouve dans l'outillage ou les moules, on y arrive
**caractérisés en ce que**
ces moules et outillage ont intérieurement une structure de mise en température, artérielle sous la forme d'un système de réseau de type artériel, avec plusieurs dérivations en série, une dérivation étant suivie d'au moins deux branchements parallèles, ce réseau étant couplée à une ou plusieurs entrées et sorties par lesquelles arrive ou sort le fluide caloporteur.

2. Formes et outillage selon la revendication 1,
**caractérisés en ce que**
le système de réseau de type artériel, partant de la zone de mise en température, dérive par des embranchements d'artères de grand diamètre jusqu'à des conduits extrêmement fins et en dehors de la zone de mise en température la canalisation du fluide se fait dans des conduits analogues à des veines.

3. Formes et outillage selon la revendication 2,
**caractérisés en ce que**
le système de réseau de type artériel est installé dans les moules et outillage de façon que dans ceux-ci, sous la surface des moules et outils à mettre en température de manière déterminée, on a des capillaires finement répartis et avec de nombreux embranchements, d'un diamètre allant jusqu'à environ 20 $\mu$m, pouvant avoir un diamètre croissant vers l'intérieur des moules et outillage, et suivant la taille de l'outillage ce diamètre peut aller jusqu'à 100 mm, et la ramification décroissante rejoint les artères qui débouchent alors dans les entrées/sorties ou les sorties/entrées.

4. Moules et outillage selon la revendication 3,
**caractérisés en ce que**
pour des moules et outillage dont il faut mettre en température seulement unc partie de leur surface, on a un réseau de conduits de type artériel pour la mise en température ou les ramifications partielles précises seulement sous cette partie de surface.

5. Formes et outillage selon les revendications 3 ou 4,
**caractérisés en ce que**
pour des formes et outillage pour lesquels toute la surface ou la plus grande partie de la surface doit d'être mise en température, ces surfaces des formes et outillage sont mises en température suivant des zones déterminées mais à des températures différentes, et au moins sous chaque zone de surface à mettre à une température différente, on a un système de réseau de type artériel, distinct, avec une ou plusieurs arrivées et sorties séparées.

6. Formes et outillage selon l'une quelconque des revendications 1 à 5,
**caractérisés en ce que**
le système de réseau de type artériel constitue un circuit avec une ou plusieurs entrées et sorties et entre la sortie par laquelle le fluide caloporteur quitte le moule ou l'outillage et l'entrée on a une installation pour régler le fluide caloporteur à la température souhaitée.

7. Application de moules et outillage selon l'une quelconque des revendications 1 à 6 comme outillage de formage mis en température.

8. Application selon la revendication 7 comme moules de coulée pour la fabrication de pièces à partir d'un produit en fusion.

9. Application selon la revendication 7 comme moules pour la mise en forme à chaud et à froid de pièces métalliques.

10. Application selon la revendication 7 comme cylindres susceptibles d'être mis en température.

11. Application des moules et outillage selon l'une quelconque des revendications 1 à 6 comme éléments de machine mis à une température déterminée.

12. Application selon la revendication 11 comme éléments de machine mis en température déterminée dans des installations ou des machines thermodynamiques.

13. Application selon la revendication 12 comme éléments mis en température de manière définie dans des moteurs à combustion interne.

14. Application selon la revendication 13 pour le refroidissement d'un moteur à combustion interne.

15. Procédé de mise en température de moules et outillage selon l'une quelconque des revendications 1 à 6 appliqué selon l'une ou plusieurs des revendications 7 à 14,
**caractérisé en ce que**
le système de réseau artériel est traversé par du fluide caloporteur entre la ou les entrées et sorties.

16. Procédé selon la revendication 15,
**caractérisé en ce que**
le fluide caloporteur circule dans un circuit et après la sortie il est remis en température par une unité de mise en température avant de revenir à l'entrée et d'effectuer un nouveau circuit.

17. Procédé selon l'une quelconque des revendications 15 ou 16,
    **caractérisé en ce que**
    le fluide caloporteur est un gaz ou un liquide ou une conversion de phase entre l'état liquide et la vapeur dans la structure de mise en température de type artériel.

18. Procédé selon la revendication 17,
    **caractérisé en ce que**
    le fluide caloporteur est de l'eau.

19. Procédé selon la revendication 17,
    **caractérisé en ce que**
    le fluide caloporteur est de l'huile.

20. Procédé selon la revendication 17,
    **caractérisé en ce que**
    le fluide caloporteur est $N_2$ ou $CO_2$ à l'état liquide ou gazeux alimentant la structure de mise en température en forme de réseau de type artériel.

## Konventioneller Werkzeugbau

Temperiermedium - Zulauf ⟶

Temperiermedium - Ablauf ⟵

FIG 1

## Arterielle Werkzeugtemperierung

Temperiermedium - Zulauf ⟶

Temperiermedium - Ablauf ⟵

FIG 2

FIG 3

FIG 4

FIG 5